# EUROPÄISCHE PATENTANMELDUNG

(11) **EP 2 886 923 A1**
(43) Veröffentlichungstag der Anmeldung: **24.06.2015**
(21) Anmeldenummer: 14152408.2
(22) Anmeldetag: 24.01.2014
(51) Int. Cl.: F16L 33/207

(54) **Schlauchkupplung für Hydraulik-Schlauchleitungen mit Umfangsdichtung**

(30) Priorität: 20.12.2013 DE 202013105869 U
(71) Anmelder: Dipl.-Ing. H. Schulz HDS Hydraulik GmbH & Co. KG, 51647 Gummersbach (DE)
(72) Erfinder: Siemens, Kornelius, 51647 Gummersbach (DE)
(74) Vertreter: Patentanwälte Dr. Solf & Zapf

(57) **Zusammenfassung**

Schlauchkupplung für Hydraulik-Schlauchleitungen mit einem Kunststoff- oder Gummi-Innenschlauch (10), einem Kunststoff- oder Gummi-Außenmantel (12) und einer Metalleinlage (11), umfassend ein Kupplungsteil (1) mit einem Kupplungskopfabschnitt (2) und eine sich an diesen anschließenden Schlauchnippel (3), sowie eine Presshülse (4). Der Schlauchnippel (3) und die Presshülse (4) besitzen sich jeweils gegenüberliegende Halteabschnitte (13, 13a) und Dichtabschnitte (14, 14a), wobei die Halteabschnitte (13, 13a) eine kraft- und formschlüssige Verbindung mit der Metalleinlage (11) und die Dichtabschnitte (14, 14a) ein Abdichten und Halten des Innenschlauches (10) mit der Metalleinlage (11) bewirken. Im Bereich der Halteabschnitte (13, 13a) des Schlauchnippels (3) und der Presshülse (4) ist zwischen den Halteabschnitten (13, 13a) eine Umfangsdichtung (17c, 17d) derart angeordnet und ausgebildet, dass eine mediendichte Abdichtung im verpressten Zustand der Presshülse (4) auf dem Schlauchnippel (3) eines zwischen den Halteabschnitten (13, 13a) verlaufenden Umfangsspaltes (8) besteht.

## Beschreibung

Die vorliegende Erfindung betrifft eine Schlauchkupplung für Hydraulik-Schlauchleitungen, bei denen zwischen einem aus Kunststoff oder Gummi bestehenden Innenschlauch und einem aus Kunststoff oder Gummi bestehenden Außenmantel eine Metalleinlage angeordnet ist, umfassend ein Kupplungsteil mit einem Kupplungskopfabschnitt und eine sich an diesen anschließenden Schlauchnippel, durch die sich eine Innenbohrung erstreckt, sowie eine den Schlauchnippel umfassende, auf diesen fixierbare Presshülse, wobei der Schlauchnippel und die Presshülse sich jeweils gegenüberliegende Halteabschnitte und Dichtabschnitte besitzen, wobei die Halteabschnitte eine kraft- und formschlüssige Verbindung mit der Metalleinlage und die Dichtabschnitte ein Abdichten und Halten des Innenschlauches mit der Metalleinlage bewirken, sowie nach den Dichtabschnitten vorteilhafterweise Endabschnitte zur Aufnahme der Schlauchleitung vorhanden sind.

Eine derartige Schlauchkupplung ist zum Beispiel aus der DE 20 2011 004 259 U1 bekannt. Derartige bekannte Schlauchkupplungen werden im Betriebseinsatz aufgrund geringer Leckagestellen beanstandet, die bei höchster Beanspruchung in schwierigen Installationen und bei längeren Feldeinsätzen auftreten können. Derartige Leckagen bestehen im Wesentlichen nur aus punktuellen Benetzungen aufgrund des herausgetretenen Öls. Hierdurch wird zwar die Funktionsfähigkeit der Schlauchkupplung nicht beeinträchtigt, jedoch ist dies aufgrund der vorgegebenen Leckageklasse 0 (staubtrocken) unerwünscht bzw. nicht gestattet. Bereits geringfügige Leckagestellen werden deshalb als Mängel ausgewiesen.

Der vorliegenden Erfindung liegt die Aufgabe zu Grunde, die bekannten Schlauchkupplungen derart zu verbessern, dass sichergestellt ist, dass im verpressten Zustand der Presshülse auf dem Schlauchnippel kein Druckmedium, insbesondere Öl, austreten kann, so dass über die gesamte Betriebszeit die Dichtigkeit gewährleistet ist.

Erfindungsgemäß wird dies dadurch erreicht, dass im Bereich der Halteabschnitte des Schlauchnippels und der Presshülse zwischen den Halteabschnitten eine Umfangsdichtung derart angeordnet und ausgebildet ist, dass eine mediendichte Abdichtung im verpressten Zustand der Presshülse auf dem Schlauchnippel eines zwischen den Halteabschnitten verlaufenden Umfangsspaltes besteht.

Erfindungsgemäß ist es von Vorteil, wenn im Bereich des Halteabschnittes des Schlauchnippels ein ringförmiger zylindrischer Dichtansatz ausgebildet ist, der in seiner Umfangsfläche eine Ringnut aufweist, in der ein elastisch verformbarer Dichtring eingesetzt ist. Der elastisch verformbare Dichtring ist vorteilhafterweise als O-Ring ausgebildet.

Hierbei ist es erfindungsgemäß von Vorteil, wenn in der Presshülse eine Innennut derart ausgebildet ist, dass sie im aufgeschobenen Zustand der Presshülse auf dem Schlauchnippel im unverpressten Zustand dem Dichtansatz gegenüberliegt, wobei zweckmäßigerweise ihre axiale Länge größer ist als die axiale Länge des Dichtansatzes.

Hierbei ist es erfindungsgemäß von Vorteil, wenn der Innendurchmesser der Innennut sowohl im unverpressten Zustand als auch im verpressten Zustand der Presshülse größer ist als der Außendurchmesser des Dichtansatzes. Hierbei ist von Vorteil, wenn der Innendurchmesser der Innennut derart bemessen ist, dass er im verpressten Zustand kleiner ist als der Außendurchmesser des Dichtrings im montierten Zustand, so dass der Dichtring im verpressten Zustand derart komprimiert ist, dass ein zwischen dem Dichtansatz und der Innennut bestehender Umfangsspalt abgedichtet ist.

Weiterhin ist es erfindungsgemäß von Vorteil, wenn in axialer Richtung am Ende der Innennut ein ringförmiger Anschlagfortsatz angeformt ist, dessen Innendurchmesser kleiner ist als der Außendurchmesser des Dichtansatzes im verpressten Zustand der Presshülse, wobei zweckmäßigerweise der Anschlagfortsatz an seiner von der Innennut abgekehrten Seite einen Außendurchmesser aufweist, der größer ist als der Außendurchmesser der Metalleinlage der Schlauchleitung und die Metalleinlage im montierten Zustand des Druckschlauches an dem Anschlagfortsatz anliegt, so dass der Anschlagfortsatz einen tiefen Anschlag darstellt.

Vorteilhafte Ausführungen der Erfindung sind in den Unteransprüchen enthalten und werden anhand des in den beiliegenden Zeichnungen dargestellten Ausführungsbeispiels näher erläutert. Es zeigen:
- Fig. 1: einen Längsschnitt durch eine erfindungsgemäße Schlauchkupplung im unverpressten Zustand,
- Fig. 2: einen Teil-Längsschnitt durch die Schlauchkupplung gemäß Fig. 1 im verpressten Zustand und
- Fig. 3: eine Detailansicht bei A in Fig. 1 im vergrößerten Maßstab.
- Fig. 4: eine Detailansicht bei A in Fig. 1 im verpressten Zustand.

In den verschiedenen Figuren der Zeichnung sind gleiche Teile stets mit denselben Bezugszeichen versehen.

Zu der anschließenden Beschreibung wird beansprucht, dass die Erfindung nicht auf das Ausführungsbeispiel und dabei nicht auf die beschriebene Merkmalskombination beschränkt ist, vielmehr können einzelne Merkmale der beschriebenen Merkmalskombination für sich oder mit nur einem Teil der beschriebenen Merkmale in Kombination für die vorliegende Erfindung wesentlich sein.

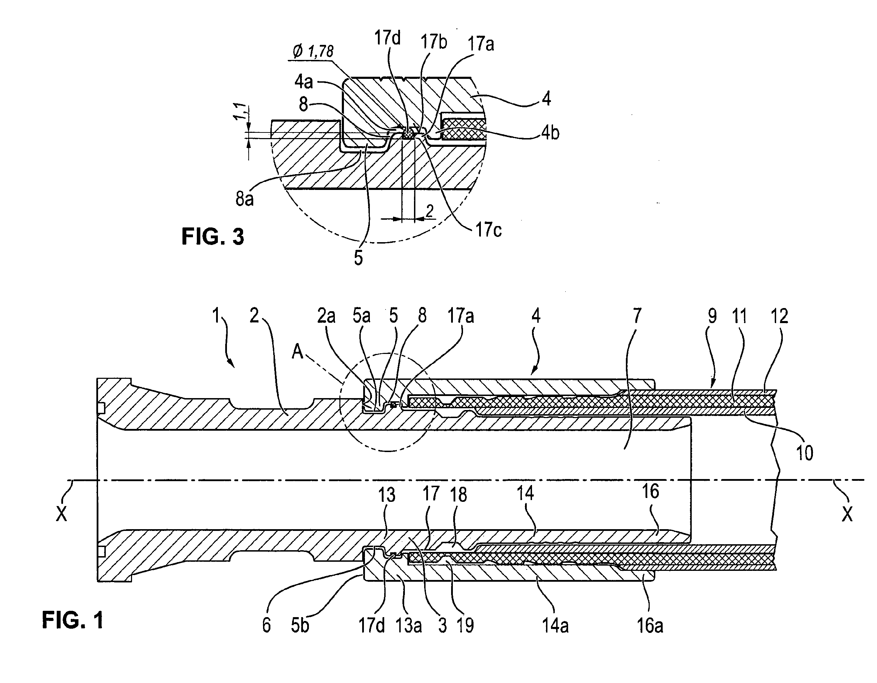

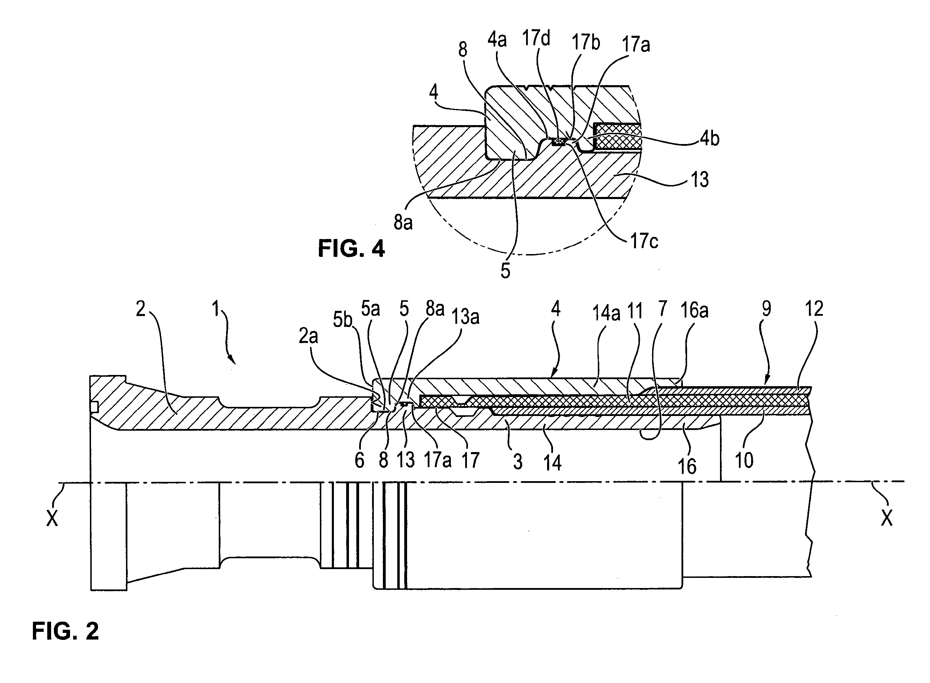

Wie aus den Figuren 1 und 2 ersichtlich ist, besteht eine erfindungsgemäße Schlauchkupplung aus einem Kupplungsteil 1, das einen vorderen Kupplungskopfabschnitt 2 und eine sich an diesen anschließenden, insbesondere dornförmigen Schlauchnippel 3 aufweist. An den Kupplungsabschnitt 2 kann in bekannter Weise jeweils eine passende Gegenarmatur angeschlossen werden. Auf dem Kupplungsteil 1 wird eine Presshülse 4 befestigt, die den Schlauchnippel 3 umschließt und mit einem an einem Ende ausgebildeten Ringkragen 5 in einer Umfangsnut 6 im Übergangsbereich zwischen dem Kupplungskopfabschnitt 2 und dem Schlauchnippel 3 fixiert wird. Durch den Kupplungskopfabschnitt 2 und den Schlauchnippel 3 hindurch verläuft eine Innenbohrung 7. Zwischen der Presshülse 4 und dem Schlauchnippel 3 befindet sich ein Umfangsspalt 8. Auf dem Schlauchnippel 3 wird eine Schlauchleitung 9 aufgeschoben, wie in den Figuren 1 und 2 dargestellt ist. Bei der Schlauchleitung 9 handelt es sich um einen an sich bekannten Hydraulikschlauch für sehr hohe Drücke und Impulslasten bis zu 500 bar für ein Hydraulikmedium, insbesondere Hydrauliköl. Die Schlauchleitung 9 besteht aus einem Innenschlauch 10, auf dem eine Metalleinlage 11, insbesondere eine mehrlagige Drahtwendel aufgebracht ist. Auf der Metalleinlage 11 ist ein Außenmantel 12 aufgebracht. Der Innenschlauch 10 und der Außenmantel 12 bestehen aus Gummi oder Kunststoff. Der Schlauchnippel 3 weist einen ersten, sich an den Kupplungskopfabschnitt 2 anschließenden Halteabschnitt 13 und diesem folgend einen Dichtabschnitt 14 auf. Der Halteabschnitt 13 wirkt mit der Metalleinlage 11 zusammen, von der der Innenschlauch 10 und der Außenmantel 12 entfernt sind, und der Dichtabschnitt 14 wirkt mit dem Innenschlauch 10 und mit der äußeren Metalleinlage 11 zusammen, von der der Außenmantel 12 entfernt ist. Der Schlauchnippel 3 besitzt vorteilhafterweise zudem einen dritten Endabschnitt 16, der mit der vollständigen Schlauchleitung 9 zusammenwirkt. Die Presshülse 4 wird - nachdem zunächst die Schlauchleitung 9 in der vorstehend beschriebenen Weise durch Entfernen des Innenschlauches 10 und des Außenmantels 12 konfektioniert worden ist - auf das geschälte und gebohrte Schlauchende aufgeschoben und danach der Schlauchnippel 3 mit der Schlauchleitung 9 verbunden. Anschließend wird die Presshülse 4 über den Schlauchnippel 3 mit der darauf befestigten Schlauchleitung 9 bis zum Anschlag geschoben, und anschließend wird durch radiales Verpressen der Presshülse 4 die Schlauchleitung 9 form- und kraftschlüssig und mediendicht mit dem Kupplungsteil 1 verbunden. Hierzu weist die Presshülse 4 eine Innenkontur auf, die mit der Außenkontur des Schlauchnippels 3 zusammenwirkt, so dass die Schlauchleitung 9 in der gewünschten Weise form- und kraftschlüssig sowie mediendicht befestigt wird. Demgemäß weist die Presshülse 4 insbesondere in Anpassung an den Schlauchnippel 3 einen Halteabschnitt 13a, einen Dichtabschnitt 14a und insbesondere einen Endabschnitt 16a auf, die jeweils dem Halteabschnitt 13, dem Dichtabschnitt 14 und dem Endabschnitt 16 des Schlauchnippels 3 im Montagezustand der Presshülse 4 gegenüberliegen und mit diesen die Schlauchleitung 9 einschließen. Die radiale Verpressung der Presshülse 4 erfolgt um ein bestimmtes, jeweils an die Dimension der Schlauchleitung 9 und der Schlauchkupplung 1 angepasstes, vorher festgelegtes Pressmaß. Beim Verpressen der Presshülse 4 wird diese durch den in die Umfangsnut 6 eingreifenden Ringkragen 5 axial fixiert, und zudem stellt die Umfangsnut 6 mit ihrem Boden einen Anschlag für die radiale Verpressung der Presshülse 4 dar. Der Ringkragen 5 ist insbesondere in seiner Breite in axialer Richtung gesehen derart bemessen, dass er während der Verpressung die Umfangsnut 6 vollständig derart ausfüllt, dass ein Formschluss entsteht, wodurch sich die Presshülse 4 axial fluchtend ausrichtet. Hierdurch hat ihr Außendurchmesser auf dem gesamten Umfang den gleichen Abstand zur mittleren Längsachse X-X, so dsas eine gleichmäßige Komprimierung des Innenschlauches 10 entsteht und Leckagen reduziert werden.

Wie weiterhin aus den Figuren 1 und 2 erkennbar ist, weist der Ringkragen 5 eine innere kreiszylindrische Umfangswandung 5a auf, wobei der Innendurchmesser im unverpressten Zustand der Presshülse 4 derart ist, dass die Presshülse 4 auf dem Schlauchnippel 3 aufgeschoben werden kann, und zwar von dessen von dem Kupplungskopf 2 abgekehrten Ende aus, wobei die Presshülse 4 mit dem Ringkragen 5 an dessen Stirnseite 5b an einer ringförmigen Anschlagfläche 2a des Kupplungsabschnitts 2 zur Anlage kommt. Die ringförmige Anschlagfläche 2a besitzt einen Innendurchmesser, der kleiner ist als der Innendurchmesser der inneren Umfangswandung 5a des Ringkragens 5, und zwar sowohl im unverpressten als auch im verpressten Zustand der Presshülse 4.

Wie weiterhin aus den Figuren 1 und 2 zu erkennen ist, besitzt der Schlauchnippel 3 in seinem Halteabschnitt 13 einen inneren zylindrischen Flächenabschnitt 17, dessen Außendurchmesser kleiner als der Innendurchmesser der Metalleinlage 11 im unverpressten Zustand und größer als der Innendurchmesser der ringförmigen Anschlagfläche 2a ist.

Zwischen dem zylindrischen Flächenabschnitt 17 und der Anschlagfläche 2a ist, siehe Fig. 3, vorteilhafterweise ein ringförmiger, zylindrischer Dichtansatz 17a ausgebildet, dessen Außendurchmesser größer als der Innendurchmesser der ringförmigen Anschlagfläche 2a und kleiner als der Innendurchmesser des Ringkragens 5 im unverpressten Zustand der Presshülse 4 ist. Gleichzeitig ist der Außendurchmesser des Dichtansatzes 17a aber größer als der Innendurchmesser des Ringkragens 5 im um das vorgegebene Pressmaß verpressten Zustand der Presshülse 4. Hierdurch ist zwischen dem Dichtansatz 17a und der Anschlagfläche 2a eine innere Umfangsnut 8a ausgebildet. Der Dichtansatz 17a weist in seiner Umfangsfläche 17b eine Ringnut 17c auf, in der ein Dichtring 17d eingesetzt ist. Der Dichtring 17d ist insbesondere als O-Ring ausgebildet und ist aus einem elastisch verformbaren Material, wobei der Dichtring 17d einen Schnurdurchmesser insbesondere von 1,78 mm aufweist. Die Ringnut 17c besitzt insbesondere eine Breite von 2 mm und eine radiale Höhe von insbesondere 1,1 mm. Der Schnurdurchmesser des Dichtrings 17d ist größer als die radiale Höhe der Ringnut 17c. Zweckmäßigerweise ragt der Dichtring 17d mit der Hälfte seines Schnurdurchmessers aus der Ringnut 17c heraus.

In axialer Richtung schließt sich an den Ringkragen 5 eine Innennut 4a der Presshülse 4 an. Diese Innennut 4a ist derart ausgebildet, dass im aufgeschobenen Zustand der Presshülse 4 im unverpressten Zustand die Innennut 4a dem Dichtansatz 17a gegenüberliegt, wobei ihre axiale Länge größer ist als die axiale Länge des Dichtansatzes 17a. Der Innendurchmesser der Innennut 4a ist sowohl im unverpressten Zustand als auch im verpressten Zustand der Presshülse 4 größer als der Außendurchmesser des Dichtansatzes 17a. Hierbei ist der Innendurchmesser der Innennut 4a derart bemessen, dass im verpressten Zustand der Innendurchmesser kleiner ist als der Außendurchmesser des Dichtrings 17d, so dass dieser im verpressten Zustand derart komprimiert ist, dass ein zwischen dem Dichtansatz 17a und der Innennut 4a bestehender Umfangsspalt 8 abgedichtet ist sowie der Dichtring 17d die Ringnut 17c insbesondere vollständig ausfüllt.

Weiterhin ist es von Vorteil, wenn am in axialer Richtung von dem Ringkragen 5 abgekehrten Ende der Innennut 4a ein ringförmiger Anschlagfortsatz 4b angeformt ist, dessen Innendurchmesser kleiner ist als der Außendurchmesser des Dichtansatzes 17a im verpressten Zustand der Presshülse 4. Der Dichtansatz 17a wird aufgrund der Dimensionierung und Formgebung der Innennut 4a zwischen dem Ringkragen 5 und dem Anschlagfortsatz 4b im verpressten Zustand der Presshülse 4 gehalten und beim Verpressen zentriert.

Der Anschlagfortsatz 4b weist an seiner vom Ringkragen 5 abgekehrten Seite einen Außendurchmesser auf, der größer ist als der Außendurchmesser der Metalleinlage 11 und dient als Tiefenanschlag für die Metalleinlage 11.

Wie aus den Figuren 1 und 2 zu erkennen ist, besitzt der Schlauchnippel 3 in seinem Halteabschnitt 13 an seiner insbesondere zylindrischen Umfangsfläche 17 mindestens eine ringförmige Vertiefung 18 sowie die Presshülse 4 in ihrem gegenüberliegenden Haltebereich 13a mindestens einen der Vertiefung 18 gegenüberliegenden, ringförmigen, radial von der inneren zylinderförmigen Umfangsfläche des Dichtabschnitts 14a nach innen ragenden Vorsprung 19, wobei der Vorsprung 19 eine derartige Höhe besitzt, dass nach einem radialen Verpressen der Presshülse 4 die Metalleinlage 11 in die Vertiefung 18 hinein verformt ist. Zudem erfolgt durch die radiale Verpressung der Presshülse 4 ebenfalls eine kraftschlüssige Anlage an den seitlich zu der Vertiefung 18 bzw. den Vorsprüngen 19 angeordneten Bereichen der Presshülse 4 und des Schlauchnippels 3 innerhalb der Halteabschnitte 13, 13a zwischen der Metalleinlage 11 und der Presshülse 4 bzw. dem Schlauchnippel 3, so dass in den Halteabschnitten 13, 13a die Metalleinlage 11 form- und kraftschlüssig eingespannt ist. Der Außendurchmesser der Umfangsfläche 17 ist kleiner/gleich dem Außendurchmesser der Metalleinlage 11, und der Außendurchmesser des Dichtbereiches 14 ist kleiner/gleich dem Innendurchmesser des Innenschlauches 10.

Der Endabschnitt 16a besitzt eine innere zylinderförmige Umfangsfläche mit einem derartigen Innendurchmesser, dass nach dem Verpressen der Presshülse 4 dieser Innendurchmesser größer/gleich dem Außendurchmesser der Schlauchleitung 9 bzw. des Außenmantels 12 ist. Zwischen dem Endabschnitt 16a und dem Ausgleichvorsprung 21 befindet sich ein Übergangskonus 26.

Durch die Ausbildung der erfindungsgemäßen Umfangsdichtung 17a, 17b, 17c, 17d zwischen den Halteabschnitten 13, 13a wird erreicht, dass über die gesamte Benutzungsdauer einer erfindungsgemäßen Schlauchkupplung ein Austreten von Druckmedium, insbesondere Hydrauliköl, verhindert wird, so dass die vorgegebene Leckageklasse 0, d. h. staubtrocken, sicher erfüllt wird.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sind. Dies bedeutet, dass grundsätzlich praktisch jedes Einzelmerkmal des Anspruchs 1 weggelassen bzw. durch mindestens ein an anderer Stelle der Anmeldung offenbartes Einzelmerkmal ersetzt werden kann.

## Patentansprüche

1. Schlauchkupplung für Hydraulik-Schlauchleitungen, bei denen zwischen einem aus Kunststoff oder Gummi bestehenden Innenschlauch (10) und einem aus Kunststoff oder Gummi bestehenden Außenmantel (12) eine Metalleinlage (11) angeordnet ist, umfassend ein Kupplungsteil (1) mit einem Kupplungskopfabschnitt (2) und eine sich an diesen anschließenden Schlauchnippel (3), durch die sich eine Innenbohrung (7) erstreckt, sowie eine den Schlauchnippel (3) umfassende, auf diesen fixierbare Presshülse (4), wobei der Schlauchnippel (3) und die Presshülse (4) sich jeweils gegenüberliegende Halteabschnitte (13, 13a) und Dichtabschnitte (14, 14a) besitzen, wobei die Halteabschnitte (13, 13a) eine kraft- und formschlüssige Verbindung mit der Metalleinlage (11) und die Dichtabschnitte (14, 14a) ein Abdichten und Halten des Innenschlauches (10) mit der Metalleinlage (11) bewirken, sowie nach den Dichtabschnitten (14, 14a) vorteilhafterweise Endabschnitte (16, 16a) zur Aufnahme der Schlauchleitung (9) vorhanden sind,
**dadurch gekennzeichnet, dass** im Bereich der Halteabschnitte (13, 13a) des Schlauchnippels (3) und der Presshülse (4) zwischen den Halteabschnitten (13, 13a) eine Umfangsdichtung (17c, 17d) derart angeordnet und ausgebildet ist, dass eine mediendichte Abdichtung im verpressten Zustand der Presshülse (4) auf dem Schlauchnippel (3) eines zwischen den Halteabschnitten (13, 13a) verlaufenden Umfangsspaltes (8) besteht.

2. Schlauchkupplung nach Anspruch 1,
**dadurch gekennzeichnet, dass** die Presshülse (4) an ihren dem Kupplungskopfabschnitt (2) zugekehrten Ende einen Ringkragen (5) aufweist, der eine innere kreiszylindrische Umfangswandung (5a) besitzt, wobei der Innendurchmesser im unverpressten Zustand der Presshülse (4) derart ist, dass die Presshülse (4) aufschiebbar ist, und wobei die Presshülse (4) mit dem Ringkragen (5) an dessen Stirnseite (5b) an einer ringförmigen Anschlagfläche (2a) des Kupplungskopfabschnittes (2) zur Anlage kommt.

3. Schlauchkupplung nach Anspruch 2,
**dadurch gekennzeichnet, dass** zwischen einem zylindrischen Flächenabschnitt (17) des Schlauchnippels (3) und der ringförmigen Anschlagfläche (2a) ein ringförmiger zylindrischer Dichtansatz (17a) ausgebildet ist, dessen Außendurchmesser größer ist als der Innendurchmesser der ringförmigen Anschlagfläche (2a) und kleiner ist als der Innendurchmesser des Ringkragens (5) im unverpressten Zustand der Presshülse (4).

4. Schlauchkupplung nach Anspruch 3,
**dadurch gekennzeichnet, dass** der Außendurchmesser des Dichtansatzes (17a) größer ist als der Innendurchmesser des Ringkragens (5) um ein vorgegebenes Pressmaß im verpressten Zustand der Presshülse (4).

5. Schlauchkupplung nach Anspruch 4,
**dadurch gekennzeichnet, dass** zwischen dem Dichtansatz (17a) und der Anschlagfläche (2a) eine innere Umfangsnut (8a) ausgebildet ist.

6. Schlauchkupplung nach einem der Ansprüche 3 bis 5,
**dadurch gekennzeichnet, dass** der Dichtansatz (17a) in seiner Umfangsfläche (17b) eine Ringnut (17c) aufweist, in der ein elastisch verformbarer Dichtring (17d) eingesetzt ist.

7. Schlauchkupplung nach Anspruch 6,
**dadurch gekennzeichnet, dass** der Dichtring (17d) einen Schnurdurchmesser besitzt, der 1,78 mm beträgt, wobei insbesondere die Breite der Ringnut (17c) 2 mm und ihre radiale Höhe 1,1 mm beträgt und der Dichtring (17d) insbesondere als O-Ring ausgebildet ist.

8. Schlauchkupplung nach Anspruch 7,
**dadurch gekennzeichnet, dass** der Dichtring (17d) einen Schnurdurchmesser besitzt, der größer ist als die radiale Höhe der Ringnut (17c).

9. Schlauchkupplung nach einem der Ansprüche 2 bis 8,
**dadurch gekennzeichnet, dass** sich in axialer Richtung an den Ringkragen (5) eine Innennut (4a) der Presshülse (4) anschließt, wobei diese Innennut (4a) derart ausgebildet ist, dass im aufgeschobenen Zustand der Presshülse (4) im unverpressten Zustand, die Innennut (4a) dem Dichtansatz (17a) gegenüberliegt, wobei insbesondere ihre axiale Länge größer ist als die axiale Länge des Dichtansatzes (17a).

10. Schlauchkupplung nach Anspruch 9,
**dadurch gekennzeichnet, dass** der Innendurchmesser der Innennut (4a) sowohl im unverpressten Zustand als auch im verpressten Zustand der Presshülse (4) größer ist als der Außendurchmesser des Dichtansatzes (17a).

11. Schlauchkupplung nach Anspruch 10,
**dadurch gekennzeichnet, dass** der Innendurchmesser der Innennut (4a) derart bemessen ist, dass im verpressten Zustand der Presshülse (4) dieser kleiner ist als der Außendurchmesser des Dichtrings (17d), so dass dieser im verpressten Zustand derart komprimiert ist, dass der zwischen dem Dichtansatz (17a) und der Innennut (4a) bestehender Umfangsspalt (8) abgedichtet ist.

12. Schlauchkupplung nach einem der Ansprüche 1 bis 11,
**dadurch gekennzeichnet, dass** in axialer Richtung an dem von dem Ringkragen (5) abgekehrten Ende der Innennut (4a) ein ringförmiger Anschlagfortsatz (4b) angeformt ist, dessen Innendurchmesser kleiner ist als der Außendurchmesser des Dichtansatzes (17a) im verpressten Zustand der Presshülse (4), wobei der Dichtansatz (17a) aufgrund der Dimensionierung und der Formgebung der Innennut (4a) zwischen dem Ringkragen (5) und dem Anschlagfortsatz (4b) im verpressten Zustand der Presshülse (4) gehalten und beim Verpressen zentriert ist.

13. Schlauchkupplung nach Anspruch 12,
**dadurch gekennzeichnet, dass** der Anschlagfortsatz (4b) an seiner vom Ringkragen (5) abgekehrten Seite einen Außendurchmesser aufweist, der größer ist als der Außendurchmesser der Metalleinlage (11) und als Anschlagfläche für die Metalleinlage (11) dient.
